# EUROPÄISCHE PATENTSCHRIFT

(11) **EP 2 566 653 B1**
(45) Veröffentlichungstag und Bekanntmachung des Hinweises auf die Patenterteilung: **11.12.2013**
(21) Anmeldenummer: 11755249.7
(22) Anmeldetag: 27.07.2011
(51) Int. Cl.: B23K 26/00

(54) **VERFAHREN ZUR AUFBRINGUNG EINER DATENMARKE AUF DIE OBERFLÄCHE EINES DIAMANTEN ODER BRILLIANTEN UND ZUR FESTSTELLUNG IHRER ECHTHEIT**
METHOD FOR APPLYING A MARKING ONTO THE SURFACE OF A DIAMOND OR BRILLIANT AND FOR VERIFYING ITS AUTHENTICITY
PROCÉDÉ D'APPLICATION D'UN MARQUAGE À LA SURFACE D'UN DIAMANT OU D'UN BRILLANT ET DE VÉRIFICATION DE SON AUTHENTICITÉ

(43) Veröffentlichungstag der Anmeldung: 13.03.2013
(73) Patentinhaber: Potemkin, Alexander, 22885 Barsbüttel (DE); Luskinovich, Petr Nikolaevich, Moscow 127562 (RU); Zhabotinsky, Vladimir Alexandrovich, Moscow 123098 (RU)
(72) Erfinder: Potemkin, Alexander, 22885 Barsbüttel (DE); Luskinovich, Petr Nikolaevich, Moscow 127562 (RU); Zhabotinsky, Vladimir Alexandrovich, Moscow 123098 (RU)
(74) Vertreter: Säger, Manfred
(86) Internationale Anmeldenummer: PCT/EP2011/003749
(87) Internationale Veröffentlichungsnummer: WO 2013/013685

(56) Entgegenhaltungen:
- WO-A1-2006/092035
- US-A1- 2002 108 398
- US-A1- 2004 248 503

## Beschreibung

Die Erfindungen beziehen sich auf ein Verfahren zur Kennzeichnung von Wertgegenständen vor allem Edelsteinen und hier insbesondere geschliffenen Diamanten (Brillianten) und ungeschliffenen. Durch die Kennzeichnung wird eine Möglichkeit zur späteren Identifikation geschaffen.

Hochwertige Gegenstände wie Juwelierarbeiten oder Konsumgüter werden oft zwecks Wiedererkennung gekennzeichnet, so dass es möglich wird, die Herkunft der Ware zum Ursprung zurückzuverfolgen. Dies ist besonders bei solchen Waren wichtig, deren Qualität und Wert nur von speziell ausgebildeten Fachleuten bestimmt werden kann. Solche Wiedererkennungszeichen auf Waren sollten beständig sein. Andererseits dürfen sie den Wert der Ware in keiner Weise mindern.

Im Falle von Edelsteinen wie Brillanten besteht seit langem das Bedürfnis nach einer sicheren Kennzeichnung zur eindeutigen Bestimmung der Identität des Steins. Eine derartige Kennzeichnung könnte beim Auffinden und Wiederherstellen von Stücken aus verlorenen oder gestohlenen Juwelierarbeiten helfen. Auch beim zeitweiligen Verleih von Brillanten, der durchaus nichts Ungewöhnliches ist, würde eine dauerhafte Kennzeichnung zur Wiedererkennung am Stein die Feststellung, dass es sich bei dem zurückgegebenen Stein um den ausgeliehenen handelt, erleichtern.

Ausserdem können solche Detektions- oder Anzeigesysteme zur Angabe von Qualität oder Güte des Schliffs oder der Polierung eines Steines dienen. Im Prinzip kann die beständige Marke bzw. auslesbare Kennzahl (Index) auf dem Diamanten auch ganz normal als Probe oder Warenzeichen dienen, d. h. zur Identifizierung des Ursprungs. Eine solche Marke kann auch helfen, um der verbreiteten falschen Auffassung, eine Diamant oder Brillant sei grundsätzlich ein Gegenstand, dessen Wert auf Grund natürlicher Merkmale wie Gewicht, Farbe und Transparenz bestimmt werden kann, entgegenzutreten. In Wirklichkeit hängt die Güte eines Edelsteins zum grossen Teil von der Qualifikation und der Arbeit des Juweliers am Stein ab, sei es bei der Auswahl der Art des Zerteilens, des Einsetzens in die Fassung, des Schliffs und des Polierens.

Die Markierung muss normalerweise unter verbesserter Auflösung und Sichtbarkeit bei der Betrachtung mit einer entsprechenden Vergrösserung bzw. unter entsprechenden Lichtverhältnissen hergestellt werden, wobei die Markierungen nicht den Wert und das Aussehen des Diamanten oder sonstigen Edelsteins beeinträchtigen dürfen.

Bekannt ist die im Patent US 4392476 [1] beschriebene Methode, bei der es um die Herstellung von Aufschriften auf Diamanten mit Hilfe eines gütegeschalteten neodymdotierten Yttrium-Aluminium-Granat-(YAG-)Lasers mit 1,06 bam oder Frequenzverdoppelung geht. Durch die Graphitisierung der Oberfläche im Brennpunkt des Lasers werden Kennzeichnungen erzeugt. Nachteil dieses bekannten Verfahrens ist der Qualitätsverlust des Kristalls, da in ihm Graphitteilchen entstehen.

Ein bekanntes Verfahren zur Herstellung von einem oder mehreren einzelnen Zeichen auf Diamant- oder Edelsteinoberflächen ist RU 2215659 [2]. Das Verfahren produziert eine Vielzahl von Strichen auf der Oberfläche des Steins, welche ein oder mehrere Zeichen bilden. Die Kennzeichnung kann mit unbewehrtem Auge nicht erkannt werde, vielmehr werden die Striche bei entsprechenden Beleuchtungs- und Vergrösserungsverhältnissen als Beugungseffekte sichtbar.

Die Marken beschädigen nicht die Reinheit des Diamanten und können die Form eines oder mehrerer alphanumerischer Zeichen oder ähnlicher Symbole haben. Die Striche selbst entstehen durch Fokussierung eines lonenbündels. Jedes einfallende Ion verdrängt eine Reihe Kohlenstoffatome von ihren Plätzen, wodurch es zur Entstehung von Zwischengitteratomen und Leerstellen im Diamantgitter kommt. Je grösser die Zerstörung (der Gitterfehler) ist, desto stärker wird die Tendenz zur Ersetzung von sp³-Diamantverbindungen durch graphitähnliche sp^{e}-Verbindungen. Diese Verbindungen können durch chemische Ätzung zerstört werden, um die fehlerhafte Schicht zu beseitigen. Bei beschränkter Dosierung und Sicherstellung einer genügenden Dosierung erzeugen die einfallenden Ionen Störungen, die den Diamanten in eine graphitähnliche oder sonstige Nicht-Diamantstruktur umwandelt, welche z. B. mit einem starken Oxydationsmittel wie verflüssigtem Kalisalpeter mit einer Temperatur von ca. 380 - 550 °C innerhalb von einigen Minuten bis einigen Stunden gereinigt werden kann.

Nachteile dieses Verfahrens sind die vergleichsweise hohe Kompliziertheit, da die Marke nach der Aufbringung chemisch geätzt werden muss, und die fehlende Fälschungssicherheit, ist die Marke doch nicht einmalig, sondern nur eine Ansammlung von Strichen einer bestimmten Form, welche alphanumerische Zeichen bilden.

Ein weiteres Verfahren zur Markierung von Objekten vor allem aus Edelsteinen, Halbedelsteinen und technischen Diamanten besteht in der Bestrahlung des Objekts mit Laserstrahlen im UV-Bereich durch eine auf dem Strahlenweg zwischen Laser und Objekt angebrachte Maske, solange bis auf der Oberfläche des Steins eine Markierung entsteht, deren Tiefe von der Länge und Intensität der Bestrahlung abhängt (RU 2102231 [3]). Nachteil ist die fehlende Fälschungssicherheit, da die Marke nicht einmalig ist, sondern nur eine Abbildung entsprechend dem durchlässigen Ausschnitt in der Maske.

Ein bekanntes Verfahren zur Aufbringung einer Datenmarke auf eine geschliffene Diamantfacette ist RU 2161093 [4]. Bei diesem Verfahren wird eine für das unbewehrte Auge unsichtbare Datenmarke auf die geschliffene Facette eines Diamanten aufgebracht, indem der betroffene Teil der Facettenoberfläche in Anwesenheit eines Reagenz mit einer Strahlung von unter 400 nm Wellenlänge bestrahlt wird. Das Reagenz reagiert mit der Facettenoberfläche und führt zur Bildung der Marke, wobei der Strahlenfluss nur so stark sein darf, dass es in der sich bildenden Marke nicht zu einer wesentlichen Verdunkelung kommt, die Reinheit des Diamanten also nicht beeinträchtigt wird (unterhalb des Ablationsniveaus des Diamanten). Der Prozess wird in Gegenwart eines Reagenz (eines oxidierenden Gases, z. B. Luft) durchgeführt, welches mit dem bestrahlten Teil der Facettenoberfläche reagiert und so zur Bildung der Marke führt. Die Bestrahlung geschah durch eine Maske, die aus einer auf einem Untergrund aus geschmolzenem Quarz aufgebrachten Chromschicht besteht. Die durchlässigen Bereiche der Maske waren ca. 1,25 mm hohe Darstellungen des Buchstaben "Alpha". Statt des genannten Typs konnten auch andere Masken verwendet werden, und die Maske konnte auch andere Dinge als den Buchstaben Alpha darstellen.

Die so hergestellte Marke bestand aus einer Reihe von Darstellungen des Buchstaben Alpha von ca. 50 pm Höhe in der Form einer 1,5 pm breiten Linie.

Nachteil ist die fehlende Fälschungssicherheit, da die Marke nicht einmalig ist, sondern nur die dem durchlässigen Ausschnitt in der Maske entsprechende Abbildung eines Buchstaben ist.

Dem genannten Verfahren am nächsten kommt das aus WO-A-2006 092035, bekannte Verfahren zur Aufbringung einer Datenmarke auf eine geschliffene Diamantfacette. Aus US-A-2003 0 38 121 ist ein weiteres Verfahren bekannt. Dieses Verfahren existiert in zwei Varianten. Bei der einen wird, fast wie im weiter oben beschriebenen Verfahren, der zu markierende Edelstein durch die Projektion der Abbildung einer im Laserresonator untergebrachten Photomaske bearbeitet. Bei der anderen Variante wird die Marke auf die Oberfläche des Edelsteins projiziert und, um die Zeichen und Ziffern auf die Oberfläche des Edelsteins aufzubringen, wird der Stein in Übereinstimmung mit einem vorgegebenen Programm gegenüber dem Laserstrahl mit Hilfe eines Verfahrsystems bewegt.

Nachteil ist die fehlende Fälschungssicherheit, da die Marke nicht einmalig ist, sondern nur die dem durchlässigen Ausschnitt in einer Photomaske entsprechende bzw. durch Scannen mit einem gegenüber dem Stein bewegten Laserstrahl geschaffene Abbildung eines Buchstaben.

Um die Echtheit eines Erzeugnisses festzustellen, reicht die blosse Aufbringung einer entsprechenden Kennzeichnung nicht. Dazu braucht man Mittel, die es ermöglichen, nicht nur die Echtheit des Erzeugnisses sondern auch die der Kennzeichnung selbst festzustellen. Welche Mittel hierzu verwendet werden können, hängt direkt von der Art der Kennzeichnung und dem Charakter der aufzutragenden Identifikationsmale ab.

Insbesondere in der Beschreibung zum Patent RU 2205733 (s. S. 6, Z. 10-27 in der linken Spalte [6]) wird vorgeschlagen, eine Abbildung des Rohsteins (Erzeugnisses) unter Einschluss der Kennzeichnung zu erstellen oder eine solche auf ein begleitendes Zertifikat zu drucken. Die vergleichende Analyse des Bildes mit dem realen Gegenstand ermöglicht die Prüfung der Übereinstimmung des Gegenstandes mit dem Zertifikat. Die Abbildung umfasst die gesamte oder einen Teil der Kennzeichnung sowie identifizierbare Merkmale des Steins wie die Kontur der Äquatorialfläche, Markierungszeichen, Winkel, Facetten usw. An Hand der in der Abbildung enthaltenen Informationen wie der Kennzeichnung, des Umrisses der Äquatorialfläche o. Ä. kann wie durch den Fingerabdruck bei einem Menschen die Identität des Steins festgestellt werden. Die Abbildung auf dem Zertifikat kann auf photographischem Wege oder mit Hilfe von Elektronenstrahlen hergestellt werden. Die Echtheit des Steins wird mit der Juwelierslupe geprüft, indem der echte Stein mit der auf dem Echtheitszertifikat gelieferten oder auf ihm selbst befindlichen Abbildung verglichen wird. Dennoch sind alle aufgezählten Identifikationsmerkmale nicht einmalig, sie können nachgemacht werden. Daher kann diese Methode nicht zur Feststellung der Identität der mit dem unten beschriebenen Verfahren her Kennzeichnung dienen. In dem zweiten am angegebenen Ort (RU 220 5733, S. 10; Z. 2-55, in der linken Spalte [7]) beschriebenen Verfahren wird vorgeschlagen, die Echtheit ohne Zertifikat, z. B. nur mit Hilfe eines normalen Juweliers, der einfache Mittel wie Juwelierslupe und Telefon benutzt, festzustellen. Der Juwelier benutzt die Lupe zum Auslesen der alphanumerischen, mit blossem Auge nicht zu erkennenden Aufschrift auf dem Edelstein. Die alphanumerische Aufschrift oder ein Teil von ihr enthält eine Information zur Identifizierung des Edelsteins wie eine Seriennummer, die mit Hilfe der Telefontastatur o. Ä. in das Echtheitserkennungssystem eingegeben werden kann. Die charakteristischen Merkmale des Steines, die zur Zeit der Kennzeichnung oder ungefähr zu dieser Zeit festgestellt worden sind, werden nun aus der Datenbank ausgelesen. Dabei wird es sich für gewöhnlich um solche Merkmale wie Schliffgüte, Grösse, Identifikation und mögliche Defektstellen sowie eine Abbildung des Steins, welche einzigartige oder beinahe einzigartige Eigenschaften zeigt, handeln. So kann man zum Beispiel die Abbildung der Kennzeichnung und des Steines oder eines Teils von ihm wie auf seiner Rundiste aufgebrachter Markierungszeichen oder auch des Umrisses seiner Äquatorialfläche speichern. Einige oder alle diese Merkmale werden dann dem Juwelier sei es über einen Sprachsynthetisator, eine Faxnachricht o.Ä. übermittelt. Wurde ein Echtheitszertifikat benutzt, kann das Zertifikat reproduziert und dem Juwelier per Fax übermittelt werden, so dass die Echtheit aller in dem Zertifikat enthaltenen Informationen bestätigt werden kann. Der Juwelier vergleicht daraufhin die übermittelten Daten mit den Eigenschaften des Steins und den auf ihm aufgebrachten Zeichen. Entspricht der Stein den gespeicherten Angaben, dann ist der Stein aller Wahrscheinlichkeit nach echt. Entspricht der Stein den gespeicherten Angaben nicht, dann ist der Stein vielleicht eine Fälschung.

Dennoch sind alle aufgezählten ldentifikationsmerkmale nicht einmalig, sie können nachgemacht werden. Daher kann diese Methode nicht zur Feststellung der Identität der mit dem unten beschriebenen Verfahren hergestellten Kennzeichnung dienen. Ausserdem kann es zu Schwierigkeiten kommen, wenn am Arbeitsplatz kein Juwelier anwesend ist.

Dem genannten Verfahren zur Bestimmung der Echtheit einer Edelsteinkennzeichnung am nächsten kommt, wenn für die Kennzeichnung Laserbestrahlung gewählt wurde, das in der Beschreibung zu RU 2205733 (s. S. 12, Z. 10-22, in der rechten Spalte [8]) erwähnte Verfahren. Dazu wird vorgeschlagen, nicht nur die Abbildung der Symbole der Kennzeichnung sondern auch die Tiefe der Abtragung zu speichern.

Dennoch können mit der entsprechenden technischen Ausrüstung sowohl die Abtragungstiefe als auch die Symbole selbst reproduziert werden, d.h. die Identifikationsmerkmale sind nicht einzigartig, sie können nachgeahmt werden. Daher kann diese Methode nicht zur Feststellung der Identität der mit dem beschriebenen Verfahren hergestellten Kennzeichnung dienen.

Die Erfindung ist darauf ausgerichtet, die Einzigartigkeit der Kennzeichnung, ihre Fälschungssicherheit und sichere Identifikation während der Echtheitsprüfung sicherzustellen.

Dies wird durch das Verfahren gemäß Anspruch 1 erreicht.

Das genannte Ergebnis wird vorzugsweise dadurch erreicht, dass beim Aufbringen der für das blosse Auge nicht erkennbaren Identifikationskennzeichnung die entsprechende Oberfläche des Diamanten oder Brillianten mit Laserlicht von weniger als 400 nm Wellenlänge bestrahlt wird und gleichzeitig der Einwirkung von Ultraschall und Laserlicht mit einer Wellenlänge von mehr als 500 nm ausgesetzt wird.

Das Ergebnis wird vorzugsweise dadurch erreicht, dass für den 400-nm-Laser die Strahlungsenergie so eingestellt wird, dass sie unter dem Wert liegt, bei dem die sich bildende Marke die Reinheit des Diamanten oder Brillianten beeinträchtigt bzw. eine wesentliche Verdunkelung eintritt, aber über dem Wert, bei dem die Graphitisierung einsetzt.

Das Ergebnis wird vorzugsweise dadurch erreicht, dass bei der Bestimmung der Echtheit der Identifikationskennzeichnung ein Verfahren benutzt wird, bei dem nach der Aufbringung der Kennzeichnung mehrere Interferenzbilder von ihr bei verschiedenen Wellenlängen der Sondierungsstrahlen aufgenommen werden. Während der Identifizierung nimmt man wieder bei denselben Wellenlängen Interferenzbilder der Identifikationskennzeichnung auf und, wenn die Bilder übereinstimmen, kann man davon ausgehen, dass die Identifikationskennzeichnung echt ist.

Die Verwendung zweier Lichtquellen zur Herstellung der Kennzeichnung empfiehlt sich aus folgenden Gründen.

Da Diamant in einem breiten Wellenspektrum stark energiedurchlässig ist, hat ein reiner Diamant insbesondere eine niedrige Durchlässigkeit, ein niedriges Reflexionsvermögen und eine hohe Absorption bei einer Wellenlänge von 183 nm, was beinah der Grenzfrequenz des Kristalls entspricht. Daher wird die Energie des Lasers im Bereich der genannten Wellenlänge von einer dünnen oberflächlichen Schicht absorbiert, die sich schnell stark aufheizt. Diese dünne Materialschicht in der Grössenordnung von einigen Nano- bis Mikrometern verdampft dadurch an der Oberfläche unter Einwirkung eines jeden Impulses und graphitisiert teilweise. Als erste Strahlenquelle kann ein Excimerlaser dienen. Excimerlaser sind gepulste Gasentladungslaser. In diesen Lasern wird ein Gasgemisch verwendet (Argon und Fluor). Excimerlaser werden normalerweise zur Erzeugung von Impulsen im Bereich von 193 Nanometern (nm) oder 0,193 pm bis 351 nm je nach dem konkret gebrauchten Edelgas- oder Halogenidexcimer benutzt.

Argon-Fluor-Excimer emittieren Strahlen mit 193 nm Wellenlänge. Bei einer solchen Wellenlänge ist die Eindringtiefe des Strahls in den reinen Diamanten minimal. Daher kann nur eine geringe Menge Material aus der Oberfläche des Diamanten durch Verdampfung abgetragen werden. Die übrigen Teile des Diamanten erhitzen sich bis zur Graphitisierung, d.h. sie werden in einer allotropen Transformation aus einer Form des elementaren Kohlenstoffs, dem Diamanten, in eine andere, das Graphit, überführt. Es ist bekannt, dass Diamant bei genügend hohen Temperaturen, ungefähr 900 °C, sich in Graphit umwandelt und das Diamantgitter vollständig zerstört wird. Allerdings kann sich das Material vor dem Eintreten dieser Zerstörung ganz oder teilweise in Graphit umwandeln und dennoch die Festigkeit und Härte des Diamantgitters bewahren.

Es wird davon ausgegangen, dass ein Diamant eine solche Umwandlung sowohl innerhalb des Kristallgitters als auch auf seiner Oberfläche erleiden kann, da man dunkel gewordene oder graphitisierte Zonen gefunden hat, die sich nicht wie üblich durch Ätzung mit Säure aus dem Diamantgitter entfernen liessen. So entsteht eine vollständig sichtbare Identifikationskennzeichnung, deren Vorhandensein die Qualität des Kristalls mindert und leicht zu entdecken ist. In Lasermarkierungssystemen werden manchmal YAG-Laser (mit Yttrium-Aluminium-Granat) oder Nd:YAG-Laser (mit neodymdotiertem Yttrium-Aluminium-Granat) eingesetzt, die auf einer Wellenlänge von 1,06 pm oder mit Frequenzverdopplung arbeiten. So fällt die vom Laser emittierte Strahlung mit 1,06 oder 0,532 pm Wellenlänge auf den Diamanten. Da Diamant für die genannten Wellenlängen grundsätzlich durchsichtig ist, wird bei solchen Kennzeichnungsverfahren für Diamanten mit energieabsorbierende Bedeckungen auf der zu kennzeichnenden Oberfläche wie Kohlenstoffruss gearbeitet, was das Verfahren verkompliziert.

Benutzt man einen Laser mit einer Wellenlänge von weniger als 400 nm gleichzeitig mit oder gefolgt von einem Laser mit einer Wellenlänge grösser als 500 nm, dann erzeugen die Impulse des Excimerlasers im bestrahlten Punkt (Bereich) einen Graphitisierungsherd, der lokale Bereiche mit Material in verschiedenen Phasenzuständen umfasst, während die auf 1,06 pm bzw. 0,532 pm emittierenden gepulsten Laser die für den optischen Durchschlag nötige elektrische Feldstärke schaffen. Durch die Einwirkung der starken elektromagnetischen Felder auf den Bereich der Graphitisierung entstehen lokale Funkenentladungen, in deren Folge Material zerstört wird und durch begleitende Rissbildung zusätzliche Mikro- und Nanodefekte entstehen. Das Ergebnis ist eine vor Kopierung, Reproduzierung und Fälschung geschützte Identifikationsmarke, da es durch die Einwirkung des Lasers, der die hohe elektrische Feldstärke produziert, zu einer Funkenentladung kommt, welche lokale Materialzerstörungen bewirkt, deren Form durch die in dem betreffenden Bereich herrschenden elektrischen und mechanischen Bedingungen bestimmt ist

Die Strahlungsenergie für den 400-nm-Laser muss so eingestellt werden, dass sie unter dem Wert liegt, bei dem die sich bildende Marke die Reinheit des Diamanten oder Brillianten beeinträchtigt bzw. eine wesentliche Verdunkelung eintritt, aber über dem Wert, bei dem die Graphitisierung einsetzt, so dass im bestrahlten Punkt nur der Herd entsteht, welcher für die weitere Bildung von Mikro- und Nanorissen und für die Abtragung durch die mit 1,06 bzw. 0,532 pm arbeitenden Laser nötig ist. Diese Einstellung für den mit weniger als 400 nm arbeitenden Laser lässt sich leicht aus dem, was wir wissen, ableiten. Bekannt ist die Abhängigkeit der Beschädigung der Diamantoberfläche von der Energiedichte des Strahls, welche eine Stufenfunktion darstellt. Unterhalb des unteren Grenzwerts gibt es keine Beschädigung, wird der obere Grenzwert überschritten, wird die Beschädigung, auch wenn die Energiedichte weiter erhöht wird, nicht mehr stärker. Deshalb lässt sich durch die Steuerung der Ausgangsenergie des Excimerlasers das gewünschte Ergebnis erreichen.

Die Verwendung sowohl optischer als auch Ultraschallquellen zur Herstellung der Kennzeichnung empfiehlt sich aus folgenden Gründen. Bei der Aufheizung des Diamanten durch die Laserstrahlung verringert sich seine mechanische Rissfestigkeit. Der Ultraschall bewirkt die Entwicklung der Nano- und Mikrorisse im Inneren des Diamanten. Die Nano- und Mikrorisse entwickeln sich unter den Bedingungen der nicht wiederholbaren Verteilung der Atome, Beimischungen und inneren Spannungen im Diamanten. Dadurch wird die Marke einmalig und nicht reproduzierbar.

Die Speicherung mehrerer Interferenzbilder der Identifikationskennzeichnung bei verschiedenen Wellenlängen der Sondierungsstrahlen nach der Aufbringung der Kennzeichnung ermöglicht es im vorgeschlagenen Verfahren zur Echtheitsbestimmung der Kennzeichnung, die Spektraleigenschaften der Marke und ihren Reflektionskoeffizienten, welcher von den Eigenschaften des Ausgangsmaterials, dem Grad der Graphitisierung und von der dreidimensionalen Abmessungen der Marke abhängt, zu bestimmen. Die Änderung jedes dieser Parameter führt, auch wenn die übrigen unangetastet bleiben, zu einer Veränderung der Spektraleigenschaften und damit zur Änderung des Reflexionskoeffizienten eines bestimmten Bereichs bei einer bestimmten Wellenlänge. Diese Eigenschaften hängen von der ursprünglichen Verteilung der Atome im Stück, der Entwicklung des Graphitisierungsbereichs unter Einwirkung der Laser und der Ausdehnung des Bereichs der Abtragung (Materialverdampfung) ab.

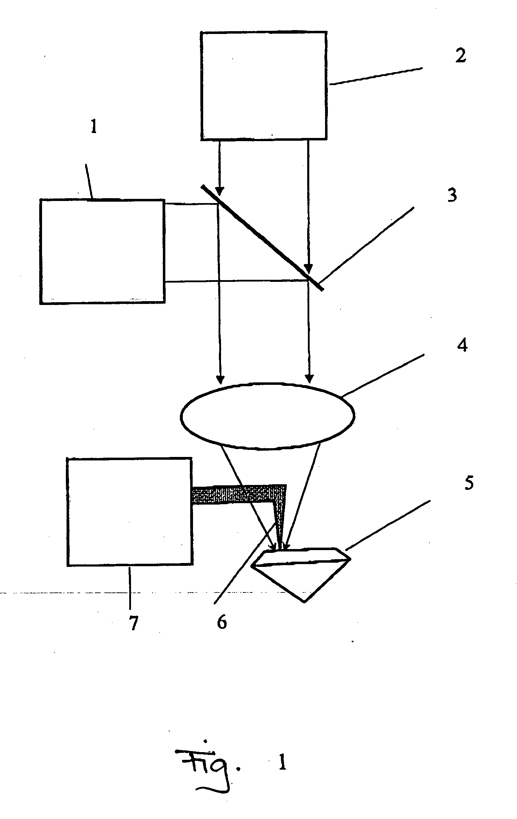

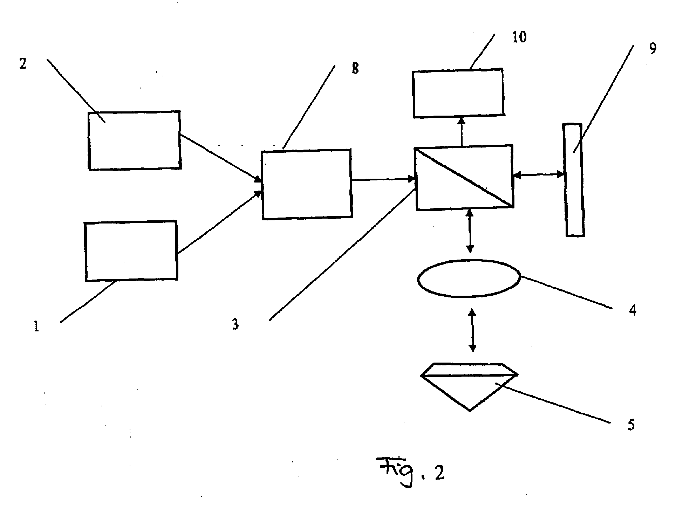

Im Folgenden soll das Wesen der genannten Erfindungen mit Beispielen für ihre Umsetzung und graphischem Material erklärt werden. Abb. 1 ist eine schematische Darstellung der praktischen Umsetzung des Verfahrens zur Markierung mit Hilfe zweier Laser und einer Ultraschallquelle. Abb. 2 ist eine schematische Darstellung des Verfahrens zur Bestimmung der Echtheit der Identifikationskennzeichnung.

Beispiel 1: Das Verfahren zum Aufbringen der für das blosse Auge nicht erkennbaren Identifikationskennzeichnung auf die Oberfläche eines Diamanten oder Brillianten kann in einer Variante mit einer Vorrichtung realisiert werden, deren schematische Darstellung in Abb. 1 zu finden ist. Die Schreibvorrichtung besteht aus Laser 1, der Wellen kürzer als 400 nm emittiert, und Laser 2, der mit Wellen über 500 nm arbeitet. Die Emissionen der Laser werden mit Hilfe des spektral selektiven, also teildurchlässigen Spiegels 3 zu einem Bündel vereinigt und auf die fokussierende Linse 4 geschickt. Im Brennpunkt der Linse wird das zu bearbeitende Werkstück 5 positioniert. An das Werkstück wird der aus einem harten Material bestehende mit einer Spitze versehene Kern 6 angeschlossen. Die Spitze selbst ist an den mit elektrischen Schwingungen arbeitenden Ultraschallgenerator 7 angeschlossen. Alle zur Vorrichtung gehörenden Komponenten sind bekannte Bauteile/-gruppen. Zur Herstellung der Identifikationskennzeichnung (Marke) verstärkt die fokussierte Strahlung der Laser 1 und 2 die Temperatur in dem Bereich der Facettenoberfläche, in den sie einfällt, und erzeugt dort den Überschlag, was zur Ausbildung dreidimensionaler Mikro- und Nanorisse (Nanostrukturen) führt. Deren Abmessungen hängen von der Anordnung der Atome im Ausgangsmaterial, den Beimischungen, den lokalen inneren Spannungen und den räumlichen Eigenschaften der Laserstrahlbündel ab. Gleichzeitig wird der mit den Laserstrahlen bearbeitete Bereich durch den Kern auch ultrabeschallt. Die Betriebsparameter der Vorrichtung und damit auch der Umsetzung des Verfahrens (Energiedichte der Laseremissionen, Dauer der Bestrahlung, Tastgrad, Frequenz, Leistung, Amplitude der Ultraschallschwingungen etc.) können experimentell ermittelt werden. Dabei sind im Sinne der Erfindung die in der Erfindungsformel angegebenen Bedingungen bei der Auswahl der Parameter einzuhalten. Insbesondere ist die Strahlungsenergie für den 400-nm-Laser so einzustellen, dass sie unter dem Wert liegt, bei dem die sich bildende Marke die Reinheit des Diamanten oder Brillianten beeinträchtigt bzw. eine wesentliche Verdunkelung eintritt, aber über dem Wert, bei dem die Graphitisierung einsetzt, so dass im bestrahlten Punkt nur der Herd entsteht, welcher für die weitere Bildung von Mikro- und Nanorissen und für die Abtragung durch die mit 106 bzw. 0,532 pm arbeitenden Laser nötig ist.

Durch den Betrieb der Vorrichtung mit gleichzeitiger oder abwechselnder Laser-und Ultraschallbehandlung auf den zu bearbeitenden Bereich entstehen so einmalige Mikro- und Nanodefekte zur Herstellung der Marke.

Beispiel 2: Das genannte Verfahren zur Bestimmung der Echtheit der für das blosse Auge nicht erkennbaren Identifikationskennzeichnung auf die Oberfläche eines Diamanten oder Brillianten kann mit der Vorrichtung realisiert werden, deren schematische Darstellung in Abb. 2 zu finden ist.

Die Vorrichtung besteht aus einem Interferenzmikroskop, in dem die Interferenzbilder bei verschiedenen Wellenlängen gemessen werden, die von Strahlungsquellen, die mit den Wellenlängen Äl und Ä2 arbeiten, generiert werden. Zum Mikroskop gehören einzelne Baugruppen, die auch zur Kennzeichnungsvorrichtung gehören, sowie Baugruppen, die nur beim hier beschriebenen Mikroskop zum Einsatz kommen. Die zum gehörende Mikroskop Ausstattung umfasst die Strahlenquelle 1 (Wellenlänge KI), die Strahlenquelle 2 (Wellenlänge Ä2), den teildurchlässigen Spiegel 3, die Fokussierlinse (Objektiv) 4, den zu prüfenden Diamanten (Brillianten) 5, den Emissionsaddierer 8 mit verschiedenen Wellenlängen (Frequenzmultiplexer), den Hilfsspiegel 9 und die auf einer lichtempfindlichen Matrix basierende optische Messvorrichtung 10. Die Messvorrichtung misst und registriert die räumliche Verteilung der optischen Strahlleistung des Interferenzbildes, das durch die Überlagerung der vom Prüfgegenstand 5 und vom Hilfsspiegel 9 reflektierten Strahlen entsteht.

Alle zur Vorrichtung gehörenden Komponenten sind bekannte Bauteile/-gruppen. Das Verfahren ist, wie im Folgenden beschrieben, umzusetzen.

Bei der Messung werden die Strahlungsquellen 1 und 2 nacheinander eingeschaltet. Die Emission der beiden auf verschiedenen Wellenlängen arbeitenden Quellen wird durch den Emissionsaddierer 8 geschickt und auf den Teilerspiegel 3 gerichtet. Vom Teilerspiegel werden die Strahlen auf den Hilfsspiegel 9 und durch das Objektiv 4 weiter auf den Prüfgegenstand (Diamanten) 5 mit der Mikromarke gelenkt. Die von der Mikromarke auf dem Prüfgegenstand 5 reflektierte Strahlung wird zurück durch das Objektiv 4 auf die optische Messvorrichtung 10 geschickt, wo es zur Überlagerung mit der vom Hilfsspiegel 9 reflektierten Strahlung kommt. Dadurch entsteht auf der Oberfläche der Messvorrichtung 10 das Interferenzbild. Beim folgenden Einschalten der Strahlenquellen 1 und 2, die mit den unterschiedlichen Wellenlängen Ä1 und Ä2 arbeiten, erhält man verschiedene Interferenzbilder, die von der auf einer lichtempfindlichen Matrix basierenden optischen Messvorrichtung 10 vermessen und festgehalten werden. Die erhaltenen Bilder können, als Hardcopy oder auf einem Datenträger gespeichert, dem Zertifikat des Brillianten (Diamanten) beigefügt werden. Zur Prüfung der Echtheit des Brillianten wird der Stein den oben beschriebenen Prozeduren unterzogen und die dabei gewonnenen Bilder werden mit den ursprünglichen Bildern verglichen. Stimmen die Bilder überein, so ist davon ausgehen, dass die Identifikationskennzeichnung echt ist, wenn nicht, dass es sich um eine Fälschung handelt.

## Patentansprüche

1. Verfahren zur Aufbringung einer für das blosse Auge nicht erkennbaren Identifikationskennzeichnung an einem Diamantene (5) oder Brillianten und zur Bestimmung deren Echtheit durch Wiedererkennung dieser Identifikationskennzeichnung, die durch Bestrahlung eines definierten Bereichs, z.B. einer Facettenoberfläche, mit Laserlicht von mehr als 500 nm Wellenlänge erzeugt wird, **dadurch gekennzeichnet, dass** zur Anbringung der Identifikationskennzeichnung der betreffende Bereich der Oberfläche mit dem Laserlicht und einem an der Oberfläche des Bereichs angreifenden, im Ultraschall schwingenden Werkzeug (6) ausgesetzt wird und dass danach zumindest zwei Interferenzbilder von der Identifikationskennzeichnung bei verschiedenen Wellenlängen einer Sondierungsstrahlung aufgenommen sowie als zu diesem Diamanten oder Brillianten gehörig und zusammen mit Angaben über den Ort des definierten Bereichs und des Auftreffwinkels der Sondierungsstrahlung gespeichert werden.

2. Verfahren nach Anspruch 1, **dadurch gekennzeichnet, dass** zusätzlich zu dem Laserlicht ein weiteres Laserlicht für den mit einer Wellenlänge von weniger als 400 nm arbeitenden Laser eingesetzt und dessen Strahlungsenergie so eingestellt wird, dass sie unter dem Wert liegt, bei dem die sich bildende Marke die Reinheit des Diamanten oder Brillianten beeinträchtigt bzw. eine wesentliche Verdunkelung eintritt, aber über dem Wert, bei dem die Graphitisierung einsetzt.

3. Verfahren nach einem der vorhergehenden Ansprüche, **dadurch gekennzeichnet, dass** die Strahlungen sowie die Ultrabeschallung gleichzeitig, nacheinander oder intermittierend appliziert werden.

4. Verfahren nach Anspruch 1 oder 2, **dadurch gekennzeichnet, , dass** zur Bestimmung der Echtheit mit den gespeicherten Werten die Sondierungsstrahlung auf denselben Ort des definierten Bereichs gerichtet und zumindest zwei Interferenzbilder von der Identifikationskennzeichnung bei den verschiedenen Wellenlängen erzeugt und diese danach mit den gespeicherten Interferenzbildern verglichen werden.

## Claims

1. A method for applying an identification marking invisible to the naked eye to a diamond (5) or brilliant and for determining its genuineness through the recognition of this identification marking, which is generated by irradiating a defined region, for example, a facet surface, with laser light of more than 500 nm wavelength,
**characterised in that**,
for the application of the identification marking, the relevant region of the surface is exposed with the laser light and to a tool (6) acting on the surface of the region, vibrating in the ultrasound range and
that, following this, at least two interference images of the identification marking at different wavelengths of a scanning radiation are recorded and stored as belonging to this diamond or brilliant and stored together with data on the location of the defined region and the angle of incidence of the scanning radiation.

2. The method according to claim 1,
**characterised in that**,
in addition to the laser light, a further laser light is used for the laser operating with a wavelength of less than 400 nm and its radiation energy is adjusted in such a manner that it is disposed below the value at which the marking formed damages the purity of the diamond or brilliant or respectively a substantial darkening occurs, but above the value at which graphitisation begins.

3. The method according to any one of the preceding claims,
**characterised in that**
the radiation and the ultrasound are applied simultaneously, in succession or intermittently.

4. The method according to claim 1 or 2,
**characterised in that**,
for the determination of genuineness, the scanning radiation is directed at the same location of the defined region with the stored values, and at least two interference images of the identification marking are generated with the different wavelengths and these are then compared with the stored interference images.

## Revendications

1. Procédé d'application d'un marquage d'identification indécelable à l'oeil nu sur un diamant (5) ou des brillants et de détermination de leur authenticité par reconnaissance de ce marquage d'identification, qui est produite par exposition d'une zone définie, par exemple d'une surface d'une facette, à une lumière laser d'une longueur d'onde supérieure à 500 nm, **caractérisé en ce que** pour appliquer le marquage d'identification, la zone concernée de la surface est exposée à la lumière laser et à un outil (6) agissant sur la surface de la zone et oscillant par ultrasons, et **en ce qu'**après cela, au moins deux images d'interférence sont enregistrées par le marquage d'identification dans le cas de longueurs d'onde différentes d'un rayonnement d'exploration et mémorisées comme faisant partie des diamants ou des brillants conjointement avec des indications concernant le lieu de la zone définie et de l'angle d'incidence du rayonnement d'exploration.

2. Procédé selon la revendication 1, **caractérisé en ce qu'**une autre lumière laser pour le laser fonctionnant avec une longueur d'onde inférieure à 400 nm est utilisée en plus de la lumière laser, et son énergie de rayonnement est réglée de sorte qu'elle se situe sous la valeur pour laquelle la marque se formant compromet la pureté des diamants ou des brillants ou un obscurcissement sensible se produit, mais au-dessus de la valeur pour laquelle la graphitisation commence.

3. Procédé selon l'une quelconque des revendications précédentes, **caractérisé en ce que** les rayonnements et le traitement à ultrasons sont appliqués simultanément, successivement ou par intermittence.

4. Procédé selon la revendication 1 ou 2, **caractérisé en ce que** pour déterminer l'authenticité au moyen des valeurs mémorisées, le rayonnement d'exploration est orienté au même endroit de la zone définie et au moins deux images d'interférence sont produites par le marquage d'identification pour les différentes longueurs d'onde et celles-ci sont ensuite comparées aux images d'interférence mémorisées.
